Europäisches Patentamt

European Patent Office

Office européen des brevets

(11) Publication number: **0 172 718**
A1

# (12) EUROPEAN PATENT APPLICATION

(21) Application number: 85305723.0

(22) Date of filing: 13.08.85

(51) Int. Cl.⁴: **B 23 B 47/24**
**F 16 D 11/00**

(30) Priority: 16.08.84 US 641431

(43) Date of publication of application:
26.02.86 Bulletin 86/9

(84) Designated Contracting States:
CH DE FR GB IT LI SE

(71) Applicant: Tapmatic Corporation
1851 Kettering Street
Irvine California 92714(US)

(72) Inventor: Johnson, Allan S.
1400 Nottingham Road
Newport Beach California 92660(US)

(74) Representative: Coxon, Philip et al,
Eric Potter & Clarkson 14 Oxford Street
Nottingham NG1 5BP(GB)

(54) Tapping attachment and drive train thereof.

(57) An automatic tapping attachment has a drive spindle disposed therein for transmitting rotational movement to a tapping bit. The tapping attachment has a driver which transmits rotational movement to the spindle by means of a ball and slot structure on the spindle. The balls and slots are circumferentially positioned in the outer surface of the spindle and are preferably equiangular from each other. Preferably three axially aligned springs positioned in grooves on the outer surface of the spindle on each axial of the balls. The springs are in contact with one of a pair of rings and impart axial biasing force to the balls. Each ring is positioned on one side of the balls. The ball and slot structure provides rotational drive engagement to the spindle in both direct and reverse drive. A spring axially mounted between the spindle and the driver member permits axial movement of the spindle relative to the driver member. The springs are angularly positioned in order to provide circumferentially uniform distribution of biasing force on the balls.

./...

EP 0 172 718 A1

Fig. 1.

-1-

## DESCRIPTION

The field of this invention is that of drive engagement and disengagement means for providing rotational drive between members which rotate about a common axis and is particularly adapted for use in tapping attachments.

The background of the invention with respect to tapping attachments is exemplified in prior patents of this inventor; which are U.S. Patent Nos. 3,002,206; 3,041,893; 3,397,588; 3,717,392; 3,791,756; and 3,999,642, and which are hereby incorporated herein by reference. Reference is also made to U.S. Patent No. 2,325,184. These background patents disclose the characteristics of tapping attachments having free axial float, direct and reverse drive and clutching means.

Therefore, a primary object of the invention is to provide an improved ball drive means which maintains the drive balls accurately positioned within the splines on the ball drive member and in the slots on the spindle in order to provide a quick and positive drive engagement and disengagement.

A further object is to provide a ball drive means providing balanced ball drive means allowing for accurate engagement and disengagement of drive to the spindle thereby allowing for accurate repeatability of thread depth.

According to one aspect of the present invention we provide an automatic tapping attachment for imparting rotational drive to a tap, comprising:

a housing;

a spindle mounted within said housing and adapted to permit rotational and axial movement thereof relative to said housing;

a drive member for imparting rotational drive to said spindle;

a ball drive means for disengageably transmitting rotational movement of said drive member to said spindle; and

means for imparting a circumferentially uniform distribution of axial biasing force on said ball drive means.

According to another aspect of the present invention we provide a spindle for use with an automatic tapping attachment of the type which has a housing and a drive member so that the spindle may move axially and rotationally relative to the housing, comprising:

an elongated generally cylindrical body having a plurality of equiangularly spaced axially disposed slots on the outer surface thereof;

ball drive means, said ball drive means including balls positioned within the slots and axially movable therein said ball drive means being engageable with the drive-- member to permit transmission of rotational movement of the drive member to the spindle while maintaining said balls in the slots; and

biasing means for imparting forces, in a direction parallel to the axis of the spindle, to the ball drive means uniformly about the circumference of said body.

The balls may be biased in an axial direction by means of a pair of rings, one on each side of said balls. Biasing forces on the rings may be provided by a plurality of pairs of springs equiangularly positioned on the outer surface of the spindle. Each pair of springs may consist of one spring mounted above the upper ring pushing the upper ring downwardly along the same point of the circumference of the surface of the spindle where a second spring mounted below the lower ring pushes the lower ring upwardly. The balls provide direct drive engagement between the ball driver member and the spindle by engagement of the balls with channels on the inner surface of the ball driver member.

The balls may provide a reverse drive engagement between the ball driver member and the spindle by engagement of the balls with channels on the inner surface of the sun gear of a planetary gear structure. Axial movement of the spindle allows the pair of rings to carry the balls out of engagement with the channels of the ball driver and into engagement with the channels of the planetary sun gear, and vice versa.

Since the balls can roll at all times during engagement and disengagement with the channels, drive engagement and disengagement occurs positively and substantially without friction.

Equiangular spacing of the springs provides for balanced biasing of the balls resulting in a more accurate positioning of the balls in the slots and channels in response to axial movement of the spindle. Since the biasing forces acting on the balls are balanced, there is substantially no binding of the balls in the slots and channels to impede their movement therein. Thus, the balanced biasing springs allow for quick and positive engagement and disengagement of drive to the spindle.

A better understanding of the present invention may be had from a consideration of the following detailed description, taken in conjunction with the accompanying drawings in which:

Figure 1 is a cutaway view of the tapping attachment of Figure 1 showing the main body of the tapping attachment and the tap securement portion of the spindle in cross-section and the upper portion of the spindle in perspective view;

Figure 2 is a perspective view of the spindle; and

Figure 3 is a top view of the spindle.

Referring now to the drawings, there is shown a tapping attachment generally designated by the numeral 10 for use with a tapping machine (not shown). Numeral 12 designates a radial holding arm which engages a stop rod or column on the tapping machine to hold the body of the attachment against rotation. Numeral 16 designates the chuck on the tapping spindle 14.

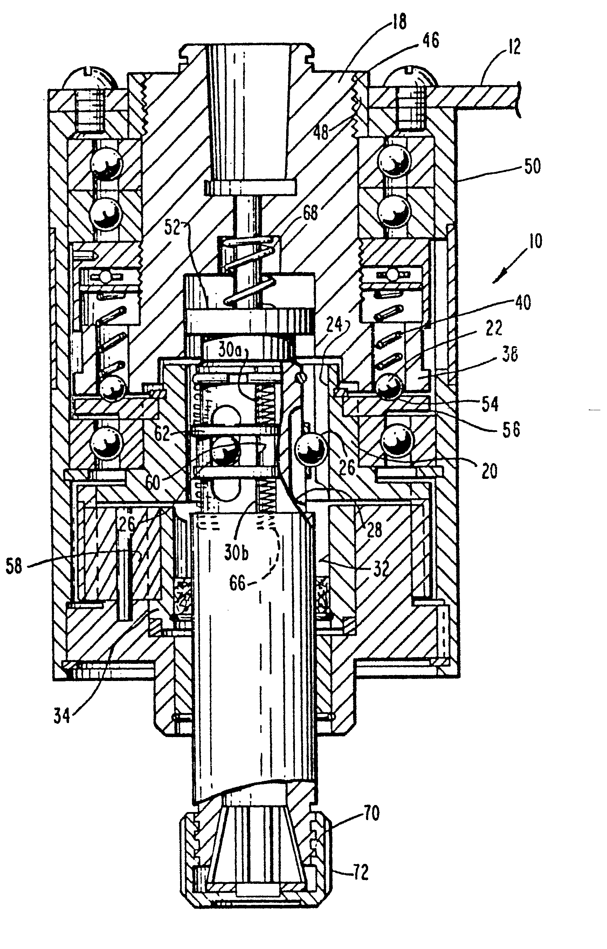

Figure 1 shows a cross-section of the tapping attachment 10. In the upper portion of the tapping attachment 10 there is a drive member 18 which is directly rotated by the tapping machine. Drive member 18 has a threaded portion 46 adapted to receive a tap 48. The radial holding arm 12 is shown at the upper end of the tapping attachment 10; however, radial holding arm 12 may also be positioned at the lower end of the tapping attachment 10. Holding arm 12 prevents housing 50 of the tapping attachment 10 from rotating with the drive member 18.

Drive member 18 transmits torque to ball drive member 20 through balls 22 of the torque release clutch 38 which will be described below. Balls 22 fit in detents 54 in plate 56. Springs 40, bias balls 22 exerting downward pressure on balls 22 keeping them in position in detents 54.

Drive member 20 also has a lower portion which is adapted for engagement with planetary gears 58 which in turn rotate inner ring 34 in the opposite direction to the rotation of member 20. Member 20 has channels 24 and inner ring 34 has channels 32. Channels 24 and 32 are adapted for engagement with balls 26. Balls 26 are mounted in slots 28 of the spindle 14. Slots 28 and channels 32 and 24 are disposed generally parallel to axis of spindle 14. Balls 26 are adapted to roll in slots 28 in a direction generally parallel to the axis of spindle 14. Balls 26 are also adapted to roll in channels 32 and 24.

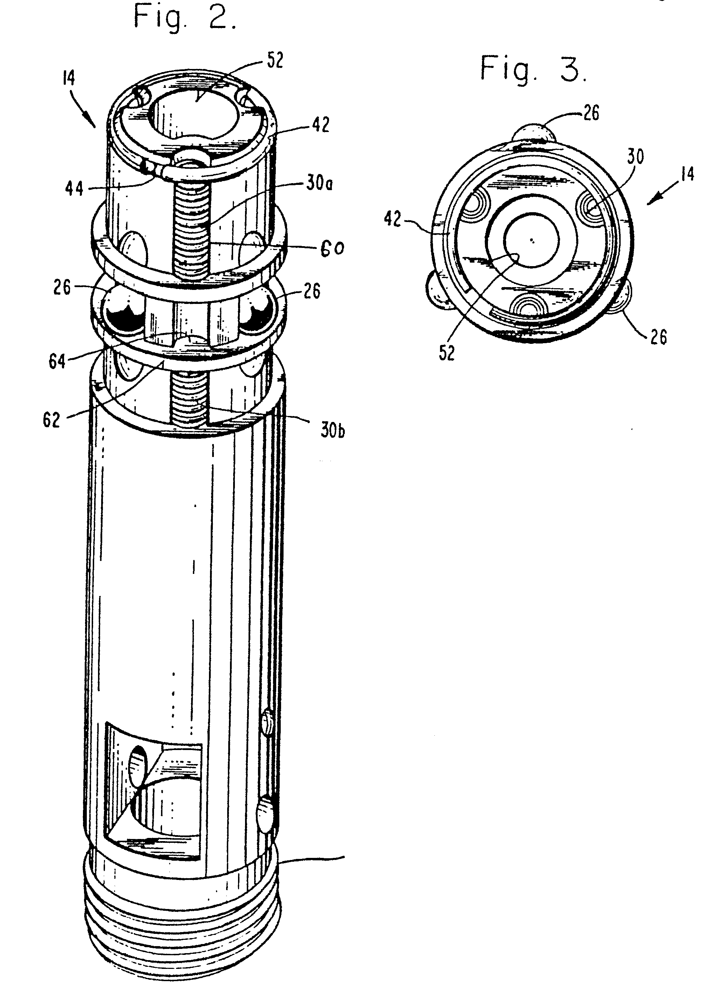

In the preferred embodiment, as illustrated in Figures 2 and 3, three balls 26 and three associated sets of slots 28 and channels 32 are utilized which are equiangularly disposed at .120° from each other about the outer surface of the spindle. On either side of balls 26 are one of a pair of rings 62 which may be slidably mounted onto the spindle. Rings 62 have inwardly disposed tabs 64 which slidably fit into a plurality of grooves 60.

In the preferred embodiment, three grooves are utilized which are, as the balls 26, equiangularly disposed at 120° from each other about the outer surface of the spindle at an upper portion thereof. Upper springs 30a and lower springs 30b fit within grooves 60 and mate with rings 62 in order to provide a biasing force against balls 26. Retainer ring 42 fits within groove 44 of spindle 14. Retaining ring 42 mates with and retains springs 30 in the grooves 60. Lands 66 are also provided in spindle 14. Lands 66 mate with the lower ends of lower springs 30b.

Spindle 14 has an axial bore 52 through which spring 68 extends. Spring 68 is mounted between drive member 18 and spindle 14. Spring 68 allows resilient axial movement of spindle 14 relative to drive member 18. Instead of one spring 68, a pair of springs may be provided with appropriate lands or ridges in order to provide for resilient axial movement of the spindle 14. The lower portion of spindle 14 is provided with a chuck and threads 70. Thread 70 allows mounting of nut 72 on the spindle for securement of a tap (not shown) into the lower end of the spindle 14.

The tapping attachment may also be provided with a torque release clutch generally designated by numeral 38. The torque release clutch 38 consists of a ball 20 riding in a detent 54 in plate 56. Spring 40 exerts downward pressure against ball 22 retaining ball in detent 54. Rotational movement of drive member 18 is transmitted through ball 22 to plate 56 and thereby to ball drive member 20. Excessive torque caused possibly by binding of the tap in the hole to be threaded will tend to push ball 22 out of detent 54 and up against spring 40. When the torque is sufficient to overcome compression of spring 40, drive between drive member 18 and plate 56 will be interrupted thereby stopping rotation of the spindle. This may prevent damage to the tapping attachment in the event of a dull tap or defect in the hole to be threaded.

In all other respects not described herein the tapping attachment is as disclosed in applicant's U.S. Patent No. 3,999,642 incorporated herein by reference.

OPERATION

The tapping machine (not shown) connects to and rotates the drive member 18 of the tapping attachment 10. Drive is transmitted from the drive member 18 to the ball drive member 20 by means of balls 11. The balls 20 are also part of the torque release clutch which will be fully described below.

Channels 24 within ball drive member 20 engage balls 26 which are adapted for rolling movement therein. The balls 26 are also adapted to move within slots 28 of the spindle 14. The position of the balls 26, slots 28 and channels 24 determines whether the tapping attachment will be in direct or reverse drive. The position of the balls are determined by the axial movement of the spindle 14. Springs and stops are mounted between the drive member 18 and the spindle 14 in order to provide the spindle 14 with limited free axial float.

As noted above, springs 30 provide biasing forces to the balls 26. The springs 30 are equiangularly spaced thereby providing balanced biasing forces on the balls 26.

The tap (not shown) advances downwardly into the hole to be threaded under the sole influence of the rotation of the spindle 14. Thus, as the tap moves downwardly the spindle 14 pulls the balls 26 downwardly compressing the springs 30a. The compressed springs 30a facilitate movement of the balls 26 out of the channels 24 on the ball drive member 20. The drive to the spindle 14 thus is disengaged.

When the spindle 14 moves down further, it engages the channels 32 on the reverse drive inner ring 34. Since the balls 26 can roll while moving axially into engagement with either the channels 24 of the ball drive member 20 or the channels 32 of the reverse drive inner ring 34, there is no jamming or binding when the balls engage either the direct or reverse drive channels 24 or 32. The springs 30 which are disposed closer to the tap facilitate reengagement of the balls with the channel 24 in direct drive. In reverse drive, the balls engage the channels 32 on the reverse drive ring 34 causing its rotation to be imparted to the spindle 14. Planetary gears 36 rotate the inner ring 34 in a direction opposite to the direction of rotation of drive member 20. The planetary gears in turn are rotated by teeth on the lower part of the drive member 20. The spindle 14 thereby rotates in a reverse direction when balls 26 engage channels 32.

In the event of an excessive load caused by a dull tapping bit or excessive rotational speed for the material to be tapped, the torque release clutch generally designated by the numeral 38 will release in either direct or reverse drive. Excessive torque of the rotating drive member 18 will cause the balls 22 to move up against the resistance of the springs 40 disengaging the ball drive to ball drive member 20. Therefore, in the event of excessive torque either in direct or reverse drive, the torque release clutch will release.

From the foregoing, those skilled in the art will readily understand the nature of the invention and the matter in which the mechanisms operate both in direct drive and reverse drive.

CLAIMS

1. An automatic tapping attachment for imparting rotational drive to a tap, comprising:

a housing;

a spindle mounted within said housing and adapted to permit rotational and axial movement thereof relative to said housing;

a drive member for imparting rotational drive to said spindle;

a ball drive means for disengageably transmitting rotational movement of said drive member to said spindle; and

means for imparting a circumferentially uniform distribution of axial biasing force on said ball drive means.

2. A tapping attachment as in Claim 1 further including a spring mounted between said spindle and said housing to permit axial movement in response to rotational movement of said spindle.

3. An automatic tapping attachment as in Claim 1 or 2 further including a reverse drive means for imparting rotational movement to said spindle in a reverse direction.

4. A tapping attachment as in Claim 3 further including a torque release clutch mounted between said drive member and said ball drive means to disengage said drive member from said ball drive means in the event of excessive torque load on said spindle either in direct drive or in reverse drive.

5. A tapping attachment as in Claim 3 further including a ball drive member mounted between said drive member and said ball drive means and adapted for imparting rotational movement of said drive member to said spindle in both direct and reverse drive.

6. A tapping attachment as in Claim 5 wherein said ball drive means includes a plurality of balls circumferentially positioned at the outer surface of said spindle, said spindle having slots to receive said plurality of balls, said plurality of balls being uniformly axially biased.

7. A tapping attachment as in Claim 6 wherein said plurality of balls are adapted to engage said ball drive member for rotation of said spindle in direct drive, said ball drive member having channels for receiving said plurality of balls.

8. A tapping attachment as in Claim 6 wherein said plurality of balls are adapted to engage a reverse drive means for rotation of said spindle in reverse drive, said reverse drive means including an inner ring having channels for receiving said plurality of balls.

9. A spindle for use with an automatic tapping attachment of the type which has a housing and a drive member so that the spindle may move axially and rotationally relative to the housing, comprising:

an elongated generally cylindrical body having a plurality of equiangularly spaced axially disposed slots on the outer surface thereof;

ball drive means, said ball drive means including balls positioned within the slots and axially movable therein said ball drive means being engageable with the drive member to permit transmission of rotational movement of the drive member to the spindle while maintaining said balls in the slots; and

biasing means for imparting forces, in a direction parallel to the axis of the spindle, to the ball drive means uniformly about the circumference of said body.

10. A spindle as in Claim 9 wherein said biasing means comprises:

a plurality of springs circumferentially disposed around the outer surface of said body and positioned on both sides of said balls parallel to the axis of the spindle, said spindle having channels to receive said springs.

11. A spindle as in Claim 10 wherein each of said plurality of springs are' angularly positioned on said body approximately 120 degrees apart, measured on the circumference of said body.

12. A spindle as in Claim 10 or 11 wherein said biasing means includes a pair of rings circumferentially disposed around the outer surface of said spindle, one of said rings being disposed adjacent said balls at one side thereof, the other of said rings being disposed at an opposite side of said balls, said rings adapted to engage said springs to impart biasing forces to said ball drive means.

13. A spindle as in Claim 12 wherein said rings include inwardly disposed tabs, said tabs being equiangularly disposed about the circumference of the spindle and adapted for fitting within the channels of said body for imparting biasing forces of said springs to the rings and permitting said springs to be retained within said channels.

14. An automatic tapping attachment for imparting rotational drive to a tap, comprising:

an elongated generally cylindrical housing;

a rotatable drive member securely attached within said housing, said drive member including a plurality of equiangularly spaced axially extending channels on its inner surface;

an elongated generally cylindrical spindle capable of moving axially and rotationally relative to the housing mounted within said housing, said spindle having a plurality of equiangularly spaced axially disposed slots on its outer surface;

a plurality of balls rollably mounted in said slots

0172718

-12-

and engageable with said channels whereby said drive member is rotatably interconnectable with said spindle;

a pair of rings disposed around the outer surface of said spindle including a first ring being disposed adjacent said balls at one side thereof and a second ring being disposed at an opposite side of said balls, said rings each having a plurality of equiangularly inwardly disposed tabs for fitting within a plurality of equiangularly spaced axially disposed channels on its outer surface; and

a plurality of pairs of upper and lower springs, each pair fitting within one of said channels wherein each of said upper springs exert an axial force on said tabs of said first ring and each of said lower rings exerts an axial force on said tabs of said second ring wherein said balls are uniformly axially biased between said springs.

0172718

Fig. 1

Fig. 2.

Fig. 3.

## DOCUMENTS CONSIDERED TO BE RELEVANT

EP 85305723.0

| Category | Citation of document with indication, where appropriate, of relevant passages | Relevant to claim | CLASSIFICATION OF THE APPLICATION (Int. Cl 4) |
|---|---|---|---|
| A | DE - B - 1 477 412 (ROHDE)  * Fig. 1 * | 1 | B 23 B 47/24  F 16 D 11/00 |
| A | DE - A - 2 229 448 (SMITH)  * Fig. 1-3 * | 1 | |
| A | DE - A1 - 2 607 497 (MATSUMOTO)  * Totality * | 1 | |
| A | GB - A - 1 549 664 (TAPMATIC)  * Totality * | 1 | |
| A | US - A - 3 787 136 (STEINER)  * Totality * | 1 | |
| | | | TECHNICAL FIELDS SEARCHED (Int. Cl 4) |
| D,A | US - A - 3 791 756 (JOHNSON)  * Totality * | 1 | B 23 B 31/00  B 23 B 47/00  F 16 D  3/00 |
| A | US - A - 4 322 186 (BOLING)  * Totality * | 1 | F 16 D 11/00 |

---

The present search report has been drawn up for all claims

| Place of search VIENNA | Date of completion of the search 26-11-1985 | Examiner FUCHS |
|---|---|---|